(19) Europäisches Patentamt
European Patent Office
Office européen des brevets

(11) **EP 3 661 684 B1**

(12) **EUROPÄISCHE PATENTSCHRIFT**

(45) Veröffentlichungstag und Bekanntmachung des Hinweises auf die Patenterteilung:
**26.06.2024   Patentblatt 2024/26**

(21) Anmeldenummer: **18749745.8**

(22) Anmeldetag: **24.07.2018**

(51) Internationale Patentklassifikation (IPC):
**B23F 5/16** (2006.01)     **B23F 19/10** (2006.01)

(52) Gemeinsame Patentklassifikation (CPC):
**B23F 5/163; B23F 19/10; B23Q 39/024**

(86) Internationale Anmeldenummer:
**PCT/EP2018/070039**

(87) Internationale Veröffentlichungsnummer:
**WO 2019/025240 (07.02.2019 Gazette 2019/06)**

(54) **WÄLZFRÄSMASCHINE, UMFASSEND EINEN WÄLZFRÄSSCHLITTEN UND EINEN ANFASSCHLITTEN AUF EINEM GEMEINSAMEN SCHIENENSYSTEM**

HOBBING MACHINE, COMPRISING A HOBBING SLIDE AND A CHAMFERING SLIDE ON A COMMON RAIL SYSTEM

FRAISE-MÈRE COMPRENANT UN CHARIOT DE FRAISE-MÈRE ET UN CHARIOT DE CHANFREINAGE SUR UN SYSTÈME DE RAILS COMMUN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2017   DE 102017213361**

(43) Veröffentlichungstag der Anmeldung:
**10.06.2020   Patentblatt 2020/24**

(73) Patentinhaber: FELSOMAT GmbH & Co. KG
75203 Königsbach-Stein (DE)

(72) Erfinder: **PESCHINA, Jürgen**
**75438 Knittlingen (DE)**

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
| | |
|---|---|
| EP-A2- 0 120 588 | EP-A2- 1 004 397 |
| EP-B1- 2 456 587 | DE-A1- 10 211 129 |
| DE-A1- 19 518 483 | DE-A1-102006 021 946 |
| DE-A1-102011 084 975 | DE-A1-102013 212 430 |
| DE-A1-102015 015 810 | DE-U1- 9 302 520 |

**Beschreibung**

Die Erfindung betrifft eine Wälzfräsmaschine, umfassend

- eine Werkstückspindel, mit der ein Werkstück um eine Werkstückachse drehbar ist,
- einen Wälzfräskopf,
- wenigstens eine Anfasvorrichtung,
- einen ersten Schlitten mit einem ersten Schlittenführungssystem, wobei auf dem ersten Schlitten der Wälzfräskopf angeordnet ist,
- ein Schienensystem, wobei auf dem Schienensystem der erste Schlitten mit seinem ersten Schlittenführungssystem verfahrbar angeordnet ist.

Eine solche Wälzfräsmaschine gemäß dem Oberbegriff des Anspruchs 1 sowie dem Oberbegriff des Anspruchs 3 ist bekannt geworden aus der DE 10 2013 212 430 A1.

Verzahnte Werkstücke wie Zahnräder und Getriebe werden in vielfältiger Weise für Maschinen und Fahrzeuge benötigt. Verzahnte Werkstücke können kostengünstig mit Wälzfräsen hergestellt werden, wobei ein Werkstück und ein Wälzfräser bei gegenseitigem Eingriff rotiert werden. Daran anschließend wird üblicherweise ein Anfasen der Zahnstirnkanten des Werkstücks durchgeführt, einerseits um Grate am Werkstück zu beseitigen, und andererseits um Kantenbrüche zu realisieren. Das Anfasen kann grundsätzlich zerspanend oder umformend erfolgen.

In vielen Fällen werden für das Wälzfräsen und das Anfasen unterschiedliche Maschinen vorgesehen. Dieses Vorgehen ist zwar einfach, aber aufgrund der mehrfachen Transportprozesse sowie Ein- und Ausspannprozesse zeitaufwendig. Zudem besteht ein großer apparativer Aufwand.

Die DE 10 2013 212 430 A1 schlägt eine Wälzfräsmaschine vor, wobei ein Wälzfräskopf und zwei Anfasvorrichtungen auf einem gemeinsamen Schlitten angeordnet sind. Der gemeinsame Schlitten ist auf Schienen parallel zu einer Rotationsachse einer Werkstückspindel verfahrbar. Die Anfasvorrichtungen sind auf dem gemeinsamen Schlitten verfahrbar und umfassen Anfasscheiben für ein plastisches Eindrücken der Zahnkanten. Das Wälzfräsen und das Anfasen kann hier in einer Aufspannung eines Werkstücks in kurzer Zeit erfolgen.

Nachteilig an dieser Werkzeugmaschine ist der erhebliche bauliche Aufwand. Der gemeinsame Schlitten ist recht groß und daher schwierig zu fertigen und zu montieren. Da er sowohl den Wälzfräskopf als auch die Anfasvorrichtungen einschließlich Zustellvorrichtungen tragen muss, ist der gemeinsame Schlitten zudem sehr schwer, so dass das Schlittenführungssystem mechanisch stark belastet wird und schnell verschleißt.

Aus der DE 20 2013 012 505 U1 ist es bekannt geworden, bei der Bearbeitung von Zahnkanten an der Stirnseite eines Werkstücks, etwa zur Fertigung einer Fase, das rotierende Werkstück mit einem rotierenden Werkzeug in Wälzeingriff zu bringen, wobei schneidend Material von der Zahnkante abgenommen wird, und wobei ein von Null verschiedener Achskreuzwinkel eingerichtet ist. Die Anwendung des Achskreuzwinkels ist dabei aus dem Wälzschälen (engl. "skiving") bekannt.

Die DE 10 2014 218 082 A1 beschreibt ein Verfahren zur spanenden Fertigung von Fasen an Zahnkanten. Bei diesem Verfahren wird ein verzahntes Werkzeug um eine Werkzeugachse rotiert, wobei die Werkzeugachse um einen Azimutwinkel $\varphi$ (der dem Achskreuzwinkel entspricht) und einen Breitenwinkel $\gamma$ gegenüber einer Werkstückachse des verzahnten Werkstücks verschwenkt ist, so dass eine Schneidkante eines Werkzeugzahns an der Zahnkante abgleitet und eine Fase an dem verzahnten Werkstück gefertigt wird; die Verschwenkung bezüglich des Breitenwinkels $\gamma$ wird meist mit einem Polarwinkel $\Theta=90°-\gamma$ beschrieben. Dabei werden $\varphi>0$ und $\Theta<90°$ gewählt. Eine zugehörige Wälzfräsmaschine verfügt über einen drehbaren Trommelhalter für zwei Werkstückspindeln, wobei durch Drehen des Trommelhalters zwischen einer Station zum Wälzfräsen und einer Station zum Anfasen gewechselt werden kann. Diese Wälzfräsmaschine gestattet wiederum ein Wälzfräsen und Anfasen in kurzer Zeit in einer Aufspannung, ist aber baulich wiederum sehr aufwändig. Die Fertigung von Fasen an einem verzahnten Werkstück im Wälzeingriff mit einem verzahnten Werkzeug unter einem von null verschiedenen Achskreuzwinkel bzw. Azimuthwinkel wird im Folgenden als Wälzschälanfasen bezeichnet.

Aufgabe der Erfindung

Der Erfindung liegt die Aufgabe zugrunde, eine baulich einfache Wälzfräsmaschine vorzustellen, mit der ein Wälzfräsen und Anfasen eines Werkstücks in kurzer Zeit erfolgen kann.

Kurze Beschreibung der Erfindung

Diese Aufgabe wird gelöst durch eine Wälzfräsmaschine gemäß Anspruch 1 sowie eine Wälzfräsmaschine gemäß Anspruch 3.

Erfindungsgemäß werden die wesentlichen Bearbeitungsvorrichtungen der Wälzfräsmaschine auf zwei Schlitten verteilt. Durch die Verteilung des Wälzfräskopfs auf den ersten Schlitten und die wenigstens eine Anfasvorrichtung auf den zweiten Schlitten wird ein sehr schwerer und großer gemeinsamer Schlitten für Wälzfräskopf und Anfasvorrichtung vermieden. Dadurch wird der Aufbau der Wälzfräsmaschine vereinfacht und verbilligt. Die beiden relativ kleinen und leichten Schlitten der erfindungsgemäßen Wälzfräsmaschine sind einfach zu fertigen und zu montieren.

Das Schlittenführungssystem eines jeden Schlittens braucht nur eine vergleichsweise kleine Kraft (Gewichtskraft) aufzunehmen, was wiederum baulich besonders einfach ist und den Verschleiß an den Schlittenführungssystemen vermindert.

Weiterhin wird das Schienensystem von beiden Schlitten erfindungsgemäß gemeinsam genutzt. Dadurch wird der bauliche Aufwand der Wälzfräsmaschine weiter verringert, und die Wälzfräsmaschine erhält einen kompakten Bau. Da der Wälzfräskopf und die wenigstens eine Anfasvorrichtung ohnehin nicht gleichzeitig an derselben Verzahnung eingesetzt werden können, behindern sich die beiden Schlitten auch grundsätzlich nicht. Zudem verbessert das gemeinsame Schienensystem die Genauigkeit der Schlittenbewegungen; insbesondere sind die beiden Schlitten quer zur Verfahrrichtung in identischer Weise durch das Schienensystem festgelegt.

Das Schienensystem umfasst eine oder mehrere Schienen. Zumindest auf einer der Schienen, und typischerweise auf allen Schienen des Schiennesystems, sind sowohl der erste Schlitten als auch der zweite Schlitten verfahrbar gelagert ("gemeinsames Schienensystem"). Typischerweise verläuft das Schienensystem gerade ("lineares Schienensystem"). Soweit für die jeweilige Bearbeitungsaufgabe erforderlich, sind der Wälzfräskopf und die wenigstens eine Anfasvorrichtung auf ihrem jeweiligen Schlitten verfahrbar und/oder verschwenkbar, typischerweise motorisch verfahrbar und/oder verschwenkbar.

Falls gewünscht können der erste Schlitten und/oder der zweite Schlitten mit einem eigenen Positionssensor zur Bestimmung der Position des jeweiligen Schlittens auf dem Schienensystem versehen sein. Ebenso können, falls gewünscht, der erste und/oder der zweite Schlitten mit einem eigenen Arretiersystem ausgestattet sein, um den jeweiligen Schlitten am Schienensystem verschiebesicher zu halten.

Die Werkstückspindel ist typischerweise ortsfest ausgebildet. Meist umfasst die Wälzfräsvorrichtung lediglich eine Werkstückspindel. Die wenigstens eine Anfasvorrichtung kann für ein umformendes Anfasen oder auch für ein spanabhebendes Anfasen ausgebildet sein.

Bevorzugte Ausführungsformen der Erfindung

Bei einer Ausführungsform der erfindungsgemäßen Wälzfräsmaschine gemäß Anspruch 1 sind sowohl der erste Schlitten als auch der zweite Schlitten als angetriebene Schlitten ausgebildet. Durch einen jeweils direkten Antrieb der beiden Schlitten können mechanische Hysteresen bei der Kraftübertragung auf die jeweiligen Schlitten minimiert werden. Dadurch ist eine besonders genaue Platzierung der Schlitten möglich, meist auch ohne die Kontrolle mit einem Positionssensor am jeweiligen Schlitten. Ebenso kann über den motorischen Antrieb ein jeweiliger Schlitten meist ohne besonderes Arretiersystem (Bremse) bei der Werkstückbearbeitung auf dem Schienensystem in Position gehalten werden. Die angetriebenen Schlitten sind jeweils selbst direkt an einen gemeinsamen motorischen Antrieb angebunden, mit dem der jeweilige Schlitten auf dem Schienensystem bewegt werden kann; ein angetriebener Schlitten braucht nicht von einem anderen Schlitten geschoben oder gezogen werden.

Bei einer bevorzugten Weiterbildung dieser Ausführungsform ist für jeden angetriebenen Schlitten ein eigener motorischer Antrieb vorhanden, mit dem der angetriebene Schlitten auf dem Schienensystem verfahrbar ist. Dadurch können die beiden Schlitten unabhängig voneinander verfahren werden. Dies vereinfacht Steuerprozesse und gestattet eine flexiblere Werkstückbearbeitung. Zudem benötigt jeder motorische Antrieb nur eine relativ kleine Leistung, um seinen jeweiligen Schlitten zu verfahren.

Ein gemeinsamer motorischer Antrieb ist für die beiden angetriebenen Schlitten vorhanden. Durch Nutzung des gemeinsamen motorischen Antriebs durch beide Schlitten kann die Wälzfräsmaschine kostengünstig ausgebildet werden. Bevorzugt ist dabei vorgesehen,

dass der gemeinsame motorische Antrieb einen an einem Maschinenbett angeordneten Antriebsmotor umfasst, der eine Antriebsspindel mit einem Außengewinde, insbesondere einen Kugelgewindetrieb, antreibt,

dass der erste Schlitten ein erstes Kraftübertragungselement mit einem Innengewinde, insbesondere eine am ersten Schlitten befestigte Mutter, aufweist, und der zweite Schlitten ein zweites Kraftübertragungselement mit einem Innengewinde, insbesondere eine am zweiten Schlitten befestigte Mutter, aufweist,

und dass das erste Kraftübertragungselement und das zweite Kraftübertragungselement beide auf der Antriebsspindel sitzen. Diese Bauform ist kostengünstig und störungsarm. Eine Drehung der Antriebsspindel wird gleichermaßen von beiden Kraftübertragungselementen in eine axiale Bewegung umgesetzt, die den jeweils zugehörige Schlitten mitnimmt. Durch Mitverfolgung der Drehung der Antriebsspindel kann die Position der beiden Schlitten auch ohne Positionssensor am Schlitten mit hoher Genauigkeit mitverfolgt werden. Durch Blockierung der Drehung der Antriebsspindel können zudem die Schlitten auf einfache Weise axial fixiert werden.

Bei der alternativen Ausführungsform der erfindungsgemäßen Wälzfräsmaschine gemäß Anspruch 3 ist vorgesehen,

dass einer der Schlitten als angetriebener Schlitten ausgebildet ist, wobei für den angetriebenen Schlitten ein motorischer Antrieb vorhanden ist, mit dem der angetriebene Schlitten auf dem Schienensystem verfahrbar ist,

dass der andere Schlitten als nicht-angetriebener Schlitten ausgebildet ist,

und dass eine Kopplungsvorrichtung vorhanden ist, mit dem der angetriebene Schlitten und der nicht-angetriebene Schlitten mechanisch miteinander koppelbar sind, insbesondere mechanisch miteinander gekoppelt sind.

Dadurch, dass nur ein Schlitten an den motorischen Antrieb angebunden werden muss, kann eine vergleichsweise einfache Antriebsmechanik und damit ein einfacher und kostengünstiger Aufbau genutzt werden. Gleichzeitig wird insgesamt nur ein motorischer Antrieb, insbesondere nur ein Antriebsmotor, benötigt, um beide Schlitten zu bewegen, was besonders kostengünstig ist. Über die Kopplungsvorrichtung (mechanische Verbindung) der beiden Schlitten wird die Bewegung des angetriebenen Schlittens auf den nicht-angetriebenen Schlitten übertragen; die Kopplungsvorrichtung kann mit einfachen und kostengünstigen Bauteilen ausgebildet werden, etwa einer Verschraubung. Zudem ist diese Bauform auch gut für eine Nachrüstung einer einfachen Maschine, die beispielsweise bisher nur mit einem Schlitten mit einem Wälzfräskopf und ohne eine Anfasvorrichtung ausgebildet war, geeignet: ein nachgerüsteter nicht-angetriebener Schlitten mit Anfasvorrichtung braucht nur auf das vorhandene Schienensystem aufgesetzt zu werden, und an den angetriebenen Schlitten mit dem Wälzfräskopf gekoppelt zu werden. Die Kopplungsvorrichtung ist typischerweise dauerhaft installiert; es ist aber auch möglich, eine An- und Abkopplung der Schlitten im Betrieb vorzusehen, etwa um einen zeitweise nicht benötigten Schlitten ruhen zu lassen, während der andere verfährt, und so Energieverbrauch und Verschleiß zu reduzieren. Der nicht-angetriebene Schlitten kann selbst nicht direkt an einen motorischen Antrieb angebunden werden, sondern kann zum Verfahren auf dem gemeinsamen Schienensystem nur vom angetriebenen Schlitten gezogen oder geschoben werden.

Bei einer bevorzugten Weiterbildung dieser Ausführungsform ist für den nicht-angetriebenen Schlitten ein eigener Positionssensor vorhanden ist, mit dem eine Verfahrposition des nicht-angetriebenen Schlittens auf dem Schienensystem bestimmbar ist. Dadurch kann ein etwaiger Positionsfehler des nicht-angetriebenen Schlittens entlang des Schienensystems beim Ziehen oder Schieben durch den angetriebenen Schlitten, etwa infolge mechanischer Hysteresen in der Kopplungsvorrichtung, erkannt und korrigiert werden. Falls gewünscht, kann auch ein eigenes Arretiersystem (Bremse) für den nicht-angetriebenen Schlitten vorgesehen sein, um eine Verfahrposition auf dem Schienensystem zu halten, insbesondere während einer Anfasbearbeitung. Der angetriebene Schlitten kann typischerweise über seinen motorischen Antrieb auf dem Schienensystem genau positioniert und arretiert werden; falls gewünscht, kann zusätzlich auch für den angetriebene Schlitten ein eigener Positionssensor und/oder ein eigenes Arretiersystem (Bremse) vorgesehen sein.

Bevorzugt ist auch eine Weiterentwicklung, bei der der angetriebene Schlitten der erste Schlitten ist, und der nicht-angetriebene Schlitten der zweite Schlitten ist. Dies entlastet die Kopplungsvorrichtung und verringert mechanische Hysteresen, da der zweite Schlitten mit der wenigstens einen Anfasvorrichtung in der Regel leichter ist als der erste Schlitten mit dem Wälzfräskopf.

Bei einer vorteilhaften Weiterbildung ist die Kopplungsvorrichtung dazu ausgebildet, die beiden Schlitten entlang einer Verfahrachse auf dem Schienensystem starr miteinander zu verbinden. Die starre Verbindung minimiert Positionsfehler (etwa wegen mechanischer Hysteresen) durch den indirekten Antrieb des nicht-angetriebenen Schlittens. Entlang der (gemeinsamen) Verfahrachse können die beiden Schlitten hin- und herbewegt werden; die Verbindung ist dabei sowohl auf Zug als auch auf Druck starr. Typischerweise ist die Verbindung der Schlitten insgesamt (insbesondere auch quer zu einer Verfahrachse) starr. Alternativ ist auch eine bewegliche, spielfrei vorgespannte Kupplung möglich; in diesem Fall ist typischerweise der nicht-angetriebene Schlitten mit einem eigenen Positionssensor und meist auch einem eigenen Arretiersystem versehen.

Bevorzugt ist dabei vorgesehen, dass die Schlitten bezüglich der Verfahrachse einander zugewandte gegenseitige Anlageflächen ausbilden, und dass die Kopplungsvorrichtung eine Spannvorrichtung umfasst, die zumindest Teile der beiden Schlitten umgreift und die Schlitten mit aneinander anliegenden Anlageflächen aufeinander zu verspannt. Diese Bauform ist einfach und minimiert ein Spiel zwischen den Schlitten beim Ziehen und Schieben des nicht angetriebenen Schlittens. Solange die Spannvorrichtung ein Minimum an elastischer Spannung behält, also die gegenseitigen Anlageflächen ihren Kontakt nicht verlieren, ist praktisch kein Spiel zwischen den Schlitten zu erwarten.

Bevorzugt ist weiterhin eine Ausführungsform, bei der die Werkstückachse der Werkstückspindel und eine Verfahrachse des Schienensystems parallel zueinander verlaufen, insbesondere wobei die Werkstückachse und die Verfahrachse horizontal verlaufen. Dadurch ist ein besonders kompakter Bau der Wälzfräsmaschine möglich. Zudem kann die Schlittenbewegung auf dem Schienensystem für das Zustellen der Werkzeuge sowohl beim Wälzfräsen als auch beim Anfasen gut genutzt werden. Bei horizontalem Verlauf der Verfahrachse ist weiterhin das Verfahren der Schlitten mit wenig Kraftaufwand möglich.

Besonders bevorzugt ist eine Ausführungsform, bei der das erste Schlittenführungssystem und das zweite Schlittenführungssystem mit Rolllagern ausgebildet sind. Rolllager für schwere Schlitten sind besonders teuer und verschleißintensiv, so dass hier die Aufteilung von Wälzfräskopf und Anfasvorrichtung auf zwei Schlitten besonders vorteilhaft ist. Weiterhin sind die Rolllager besonders leichtgängig. Alternativ können auch Gleitlager in den Schlittenführungssystemen eingesetzt werden.

Vorteilhaft ist auch eine Ausführungsform, bei der auf dem zweiten Schlitten zwei Anfasvorrichtungen angeordnet sind. Mit zwei Anfasvorrichtungen können in schneller Folge (oder sogar gleichzeitig, bei entsprechender Einrichtung der Anfasvorrichtungen) zwei verschiedene axiale Bereiche eines Werkstücks, oder auch linksseitige und rechtsseitige Fase derselben Zähne bzw. derselben Zahnstirnseite gefertigt werden.

Besonders bevorzugt ist weiterhin eine Ausführungsform, bei der die wenigstens eine Anfasvorrichtung für ein Wälzschälanfasen ausgebildet ist. Anfasvorrichtungen für ein Wälzschälanfasen, insbesondere unter doppelter Verkippung (siehe unten), sind aufgrund der benötigten Bewegungsfreiheitsgrade relativ schwer, so dass in diesem Fall die Aufteilung von Wälzfräskopf und Anfasvorrichtung auf verschiedene Schlitten eine besonders große Entlastung der Schlittenführungssysteme ("Schlittenlager") bewirkt.

Besonders bevorzugt ist eine Weiterbildung dieser Ausführungsform, bei der die wenigstens eine Anfasvorrichtung für ein Wälzschälanfasen unter einem Azimuthwinkel $\varphi > 0°$ und einem Polarwinkel $\Theta < 90°$ ausgebildet ist. Das Anfasen durch Wälzschälen mit doppelter Verkippung der Werkzeugachse wird in der DE 10 2014 218 082 A1 beschrieben, auf deren Inhalt hiermit vollumfänglich Bezug genommen wird. Durch die doppelte Verkippung unterliegt die Anfasbearbeitung besonders wenig geometrischen Einschränkungen.

Bevorzugt ist eine Weiterentwicklung dieser Weiterbildung, die vorsieht,

dass die Werkstückachse entlang einer x-Richtung verläuft,
dass eine Werkzeughalterung auf dem zweiten Schlitten jeweils linear in einer y-Richtung und einer z-Richtung verfahrbar ist, wobei die x-, y- und z-Richtung ein rechtwinkliges Koordinatensystem bilden,
dass eine Werkzeugspindel für ein verzahntes Werkzeug auf der Werkzeughalterung angeordnet ist,
und dass eine Werkzeugachse, um die die Werkzeugspindel drehbar ist, um den Azimuthwinkel $\varphi > 0°$ in einer xy-Ebene gegen die x-Richtung verschwenkt ist und um den Polarwinkel $\Theta < 90°$ gegen die z-Richtung verschwenkt ist, insbesondere wobei die x-Richtung und die z-Richtung horizontal verlaufen. Mit diesem Aufbau kann auf einfache Weise das Wälzschälanfasen mit doppelter Verkippung der Werkzeugachse betrieben werden. Die Verfahrachse des Schienensystems, entlang der der erste Schlitten und der zweite Schlitten verfahrbar ist, verläuft typischerweise parallel zur x-Richtung.

Bevorzugt ist dabei vorgesehen, dass auf der Werkzeughalterung ein Drehhalter angeordnet ist, der um eine Drehachse DA drehbar ist, insbesondere motorisch drehbar ist, wobei die Drehachse parallel zur z-Richtung verläuft, und dass auf dem Drehhalter die Werkzeugspindel angeordnet ist. Mit dem Drehhalter kann die Werkzeugspindel bzw. das dort gehaltene Werkzeug für eine Bearbeitung der beiden gegenüberliegenden Werkstückseiten die Position wechseln; die beiden Werkstückseiten können dann in schneller Folge bearbeitet werden. Typischerweise wird lediglich zwischen zwei um 180° verdrehte Drehpositionen zur Bearbeitung der Vorder- und Rückseite des Werkstücks gewechselt.

Vorteilhaft ist weiterhin vorgesehen,

dass auf dem zweiten Schlitten zwei Anfasvorrichtungen für ein Wälzschälanfasen angeordnet sind, wobei auf dem Drehhalter auch eine weitere Werkzeugspindel für ein weiteres verzahntes Werkzeug angeordnet ist,
und wobei eine weitere Werkzeugachse, um die die weitere Werkzeugspindel drehbar ist, um einen weiteren Azimuthwinkel $\varphi w$ in der xy-Ebene gegen die x-Achse verschwenkt ist und um einen weiteren Polarwinkel $\Theta w$ gegen die z-Achse verschwenkt ist, mit $\varphi w = -\varphi$ und $\Theta w = \Theta$ Durch diese Ausrichtung von Werkzeugachse und weiterer Werkzeugachse kann die linksseitige und rechtsseitige Fase an einem Werkstück bzw. einer Zahnstirnseite des Werkstücks unter gleichen Bedingungen und in rascher Folge gefertigt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigen:

Fig. 1     eine schematische Perspektivansicht von schräg vorne einer ersten Ausführungsform einer erfindungsgemäßen Wälzfräsmaschine, ohne Gegenlager;

Fig. 2     eine schematische Perspektivansicht von schräg hinten Wälzfräsmaschine von Fig. 1, mit Gegenlager;

Fig. 3     eine schematische Aufsicht auf die Wälzfräsmaschine von Fig. 2;

Fig. 4     eine schematische Perspektivansicht von schräg hinten des zweiten Schlittens der Wälzfräsmaschine von Fig. 1;

Fig. 5a    eine schematische Perspektivansicht von schräg vorne des zweiten Schlittens der Wälzfräsmaschine von Fig. 1, mit Illustration der Orientierung eines unteren Anfaswerkzeugs;

Fig. 5b    eine schematische Perspektivansicht von schräg vorne des zweiten Schlittens der Wälzfräsmaschine von Fig. 1, mit Illustration der Orientierung eines oberen, weiteren Anfaswerkzeugs;

Fig. 6    eine schematische Aufsicht auf eine zweite Ausführungsform einer erfindungsgemäßen Wälzfräsmaschine;

Fig. 7    eine schematische Aufsicht auf eine dritte Ausführungsform einer erfindungsgemäßen Wälzfräsmaschine;

Fig. 8    eine schematische Seitenansicht auf eine vierte Ausführungsform einer erfindungsgemäßen Wälzfräsmaschine, umfassend eine Kopplungsvorrichtung mit Spannvorrichtung.

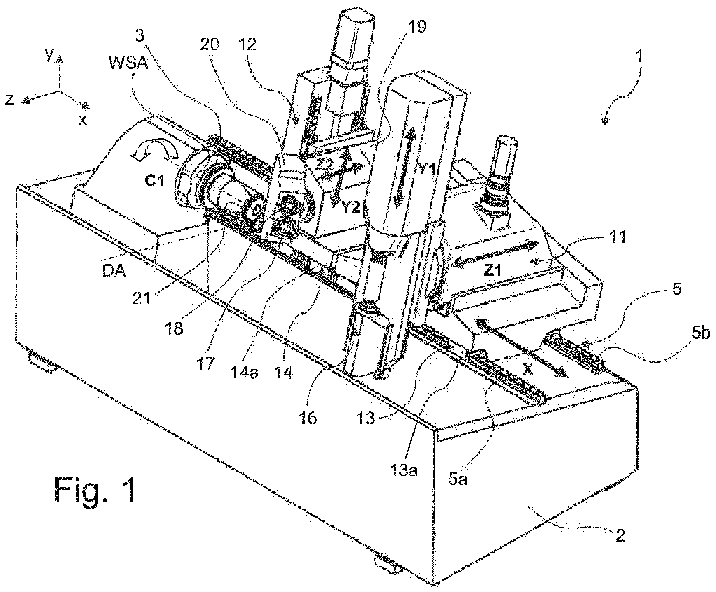

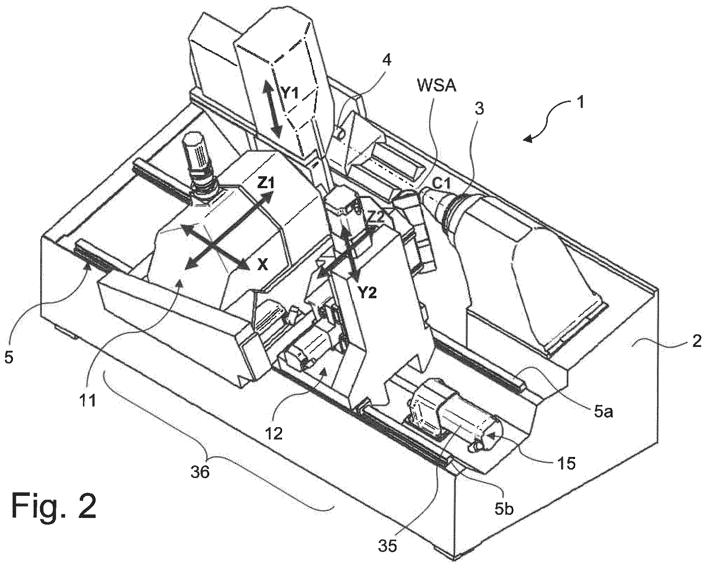

Die **Fig. 1** in einer schematischen Perspektivansicht von schräg vorne und die **Fig. 2** in einer schematischen Perspektivansicht von schräg hinten illustrieren eine erste Ausführungsform einer erfindungsgemäßen Wälzfräsmaschine 1.

Auf einem Maschinenbett 2 ist eine um eine horizontale Werkstückachse WSA rotierbare, ortsfeste Werkstückspindel 3 angeordnet, vgl. auch Maschinenachse C1. Die Werkstückachse WSA definiert hier eine x-Richtung, die zusammen mit der vertikalen y-Richtung und der ebenfalls horizontalen z-Richtung ein rechtwinkliges Koordinatensystem bildet. Ein an der Werkstückspindel 3 eingespanntes Werkstück 21 kann an einem in x-Richtung verfahrbarem Gegenlager 4 (nicht in Fig. 1 dargestellt, vgl. aber Fig. 2) abgestützt werden.

Weiterhin ist auf dem Maschinenbett 2 ein Schienensystem 5 angeordnet, dass hier zwei Schienen 5a, 5b umfasst. Die Schienen 5a, 5b verlaufen in horizontaler Richtung parallel zur Werkstückachse WSA. Auf dem Schienensystem 5, hier jeweils auf beiden Schienen 5a, 5b, sind sowohl ein erster Schlitten 11 als auch ein zweiter Schlitten 12 verfahrbar gelagert ("gemeinsames Schienensystem"). Entsprechend können die beiden Schlitten 11, 12 zumindest in einem mittleren Bereich auf einem identischen Abschnitt 36 des Schienensystems 5 verfahren. Der erste Schlitten 11 verfügt hierfür über ein erstes Schlittenführungssystem 13, umfassend mehrere (hier vier) Rolllager (Rolllager-Elemente) 13a, und der zweite Schlitten 12 verfügt über ein zweites Schlittenführungssystem 14, ebenfalls umfassend mehrere (hier vier) Rolllager (Rolllager-Elemente) 14a. Die Rolllager 13a, 14a umfassen Rollen oder Kugeln (nicht näher dargestellt), die an den Schienen 5a, 5b abrollen.

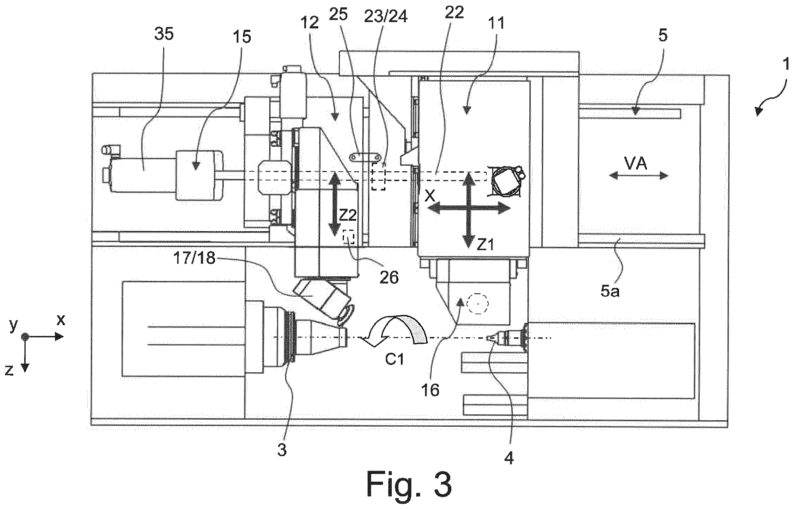

Der erste Schlitten 11 ist in der gezeigten Ausführungsform als angetriebener Schlitten ausgebildet und mittels eines motorischen Antriebs 15, der einen Antriebsmotor 35 umfasst, auf dem Schienensystem 5 verfahrbar, vgl. Maschinenachse x. Der zweite Schlitten 12 ist in der gezeigten Ausführungsform als nicht-angetriebener Schlitten ausgebildet und an den ersten Schlitten 11 mechanisch gekoppelt. Durch Schieben und Ziehen mit dem ersten Schlitten 11 ist auch der zweite Schlitten 12 auf dem Schienensystem 5 verfahrbar (mehr dazu bei Fig. 3 unten).

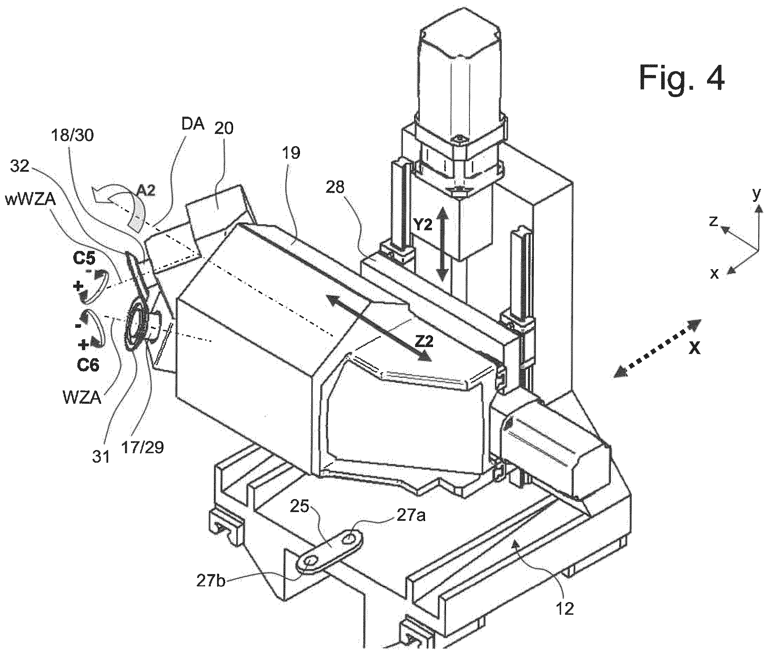

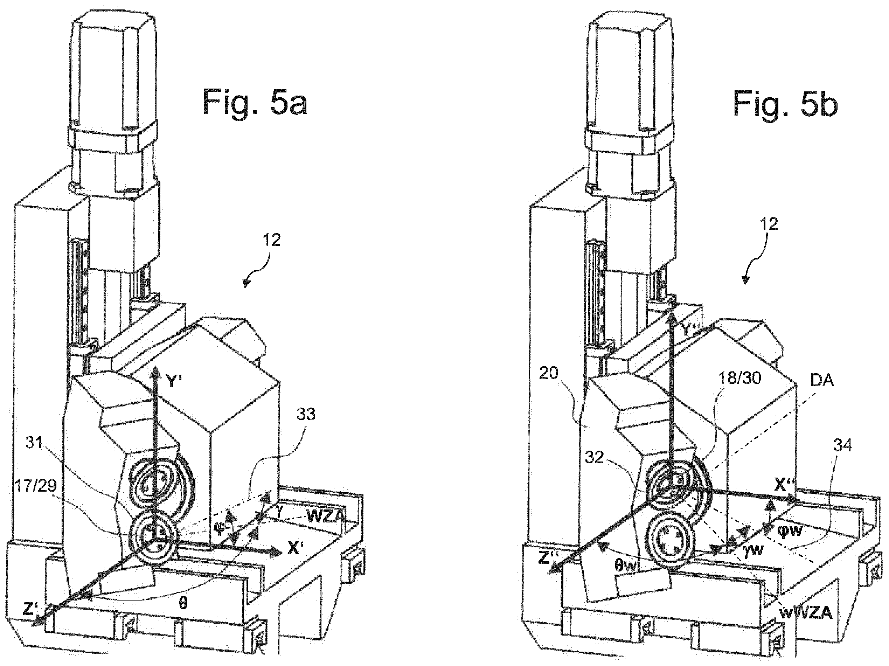

Auf dem ersten Schlitten 11 ist ein Wälzfräskopf 16 angeordnet, der mittels der Maschinenachsen Y1 und Z1 verfahrbar, insbesondere an ein Werkstück 21 zustellbar ist. Auf dem zweiten Schlitten 12 sind hier zwei Anfasvorrichtungen 17, 18 angeordnet, die zum Wälzschälanfasen unter doppelter Verkippung ausgebildet sind (mehr dazu bei Fig. 4, Fig. 5a und Fig. 5b unten). Eine Werkzeughalterung 19 ist mittels der Maschinenachsen Y2, Z2 auf dem zweiten Schlitten 12 verfahrbar, insbesondere für eine Zustellung der Anfasvorrichtungen 17, 18 an ein Werkstück 21. Die Werkzeughalterung 19 trägt wiederum einen Drehhalter 20, der um eine Drehachse DA, die parallel zur z-Richtung verläuft, drehbar ist. Auf dem Drehhalter 20 sind zwei Werkzeugspindeln der Anfasvorrichtungen 17, 18 angeordnet.

Die Zustellsysteme auf den beiden Schlitten 11, 12 sind unabhängig voneinander ausgebildet. Durch Aufteilung der Wälzfräsbearbeitung und der Anfasbearbeitung (einschließlich der zugehörigen Zustellsysteme) auf die beiden Schlitten 11, 12 ist jeder einzelne Schlitten 11, 12 vergleichsweise klein und leicht.

Die **Fig. 3** zeigt eine Aufsicht der Wälzfräsmaschine 1 von Fig. 1 und Fig. 2, mit der die Kopplung und der Antrieb der Schlitten 11, 12 dieser Ausführungsform erläutert wird.

Der motorische Antrieb 15 weist den Antriebsmotor 35 auf, welcher am Maschinenbett 2 angeordnet ist; der Antriebsmotor 35 treibt eine Antriebsspindel 22 mit einem Außengewinde, hier einen Kugelspindeltrieb, an. Die Antriebsspindel 22 erstreckt sich parallel zur x-Richtung, also parallel zur Verfahrachse VA des Schienensystems 5. Die Antriebsspindel 22 verläuft hier unter beiden Schlitten 11, 12 entlang. Auf der Antriebsspindel 22 ist ein Kraftübertragungselement 23 mit einem Innengewinde, hier eine Mutter 24, aufgesetzt (aufgeschraubt). Das Kraftübertragungselement 23 ist in nicht näher dargestellter Weise fest mit dem ersten Schlitten 11 verbunden, etwa verschraubt. Durch Drehen der Antriebsspindel 22 schiebt (schraubt) sich dann das Kraftübertragungselement 23, das durch den fest verbundenen Schlitten 11 drehfest gehalten wird, entlang der Verfahrrichtung VA des gemeinsamen Schienensystems 5 voran; dabei wird der erste Schlitten 11 mitgenommen. Der erste Schlitten 11 ist damit ein angetriebener Schlitten.

Der zweite Schlitten 12 ist mit einer Kopplungsvorrichtung 25 mit dem ersten Schlitten 11 verbunden, die als ein Kopplungsriegel ausgebildet ist (siehe hierzu Fig. 4). Bei Bewegung des ersten Schlittens 11 entlang der Verfahrachse VA wird der zweite Schlitten 12 vom ersten Schlitten 11 geschoben oder gedrückt, so dass auch der zweite Schlitten 12 auf dem gemeinsamen Schienensystem 5 verfahren wird.

Man beachte, dass das Kraftübertragungselement 23 hier nahe bei der Kopplungsvorrichtung 25 angeordnet ist, wodurch die Positioniergenauigkeit des zweiten Schlittens 12 verbessert wird.

Bevorzugt weist der zweite Schlitten 12 einen eigenen Positionssensor (Messkopf) 26 auf, der hier mit einem in der vorderen Schiene 5a integrierten Positionierungssystem zusammenwirkt. Dadurch können Positionierfehler des zweiten Schlittens 12, etwa verursacht durch mechanische Hysteresen in der Kopplungsvorrichtung 25, erkannt und korrigiert werden (durch entsprechendes Verfahren des zweiten Schlittens 12, unter indirekter Nutzung des motorischen Antriebs 15). Bevorzugt wird der Positionssensor 26 in ein Rollager (einen Rollschuh) integriert.

Die **Fig. 4** erläutert den zweiten Schlitten 12 und die Kopplungsvorrichtung 25 näher.

Die Kopplungsvorrichtung 25 ist hier als ein zweifach gelochter Kopplungsriegel ausgebildet, wobei jeweils eine Schraube (nicht näher dargestellt) durch eines der Löcher 27a, 27b geführt und in eine Gewindebohrung (nicht näher dargestellt) des jeweiligen Schlittens eingeschraubt wird. Obwohl der Kopplungsriegel an den Schrauben drehbeweglich ist, kommt es im Betrieb zu keiner merklichen Verdrehung des Kopplungsriegels, da die Schlitten 11, 12 durch das Schienensystem 5 lateral (in z-Richtung) festgehalten sind. Die Kopplungsvorrichtung 25 wirkt somit in Richtung der Verfahrachse (entspricht der x-Richtung) starr.

Weiterhin ist die Werkzeughalterung 19 gezeigt, die über ein Kreuzschlittensystem sowohl in y-Richtung (vgl. Maschinenachse Y2) als auch in z-Richtung (vgl. Maschinenachse Z2) verfahrbar ist. Das Kreuzschlittensystem umfasst dabei einen Zwischenträger 28. Zudem ist die Werkzeughalterung 19 mit dem gesamten zweiten Schlitten 12 in x-Richtung verfahrbar (durch Kopplung an den ersten Schlitten 11, der mit der Maschinenachse x verfahrbar ist).

Auf der Werkzeughalterung 19 ist der Drehhalter 20 angeordnet, der um die Drehachse DA motorisch drehbar ist, vgl. Maschinenachse A2. Auf dem Drehhalter 20 sind die Werkzeugspindel 29 der (unteren) Anfasvorrichtung 17 und die Werkzeugspindel 30 der (oberen) weiteren Anfasvorrichtung 18 angeordnet. Die Werkzeugachse WZA der Werkzeugspindel 29 ist gegenüber der weiteren Werkzeugachse wWZA der Werkzeugspindel 30 hier fest verkippt angeordnet. Die Werkzeugspindel 29 und die weitere Werkzeugspindel 30 sind motorisch rotierbar, vgl. Maschinenachsen C6, C5, um jeweils ein gehaltenes (eingespanntes) verzahntes Werkzeug 31, 32 anzutreiben.

Die **Fig. 5a** erläutert die Orientierung der Werkzeugachse WZA der Werkzeugspindel 29 der unteren Anfasvorrichtung 17. Man beachte dabei, dass die Werkstückachse eines zu bearbeitenden Werkstücks (nicht eingezeichnet) entlang der x-Richtung verlauft. Am Werkzeug 31 ist ein Hilfskoordinatensystem x'/y'/z' eingezeichnet, das gegenüber dem eigentlichen xyz-Koordinatensystem parallel verschoben ist, um die Winkelverhältnisse besser erkennen zu können.

Die Werkzeugachse WZA ist um einen Polarwinkel $\Theta$ gegenüber der z'-Richtung verschwenkt. Die Differenz des Polarwinkels $\Theta$ zu 90° (also der Winkel zwischen der Werkzeugachse WZA und der x'y'-Ebene) wird als Breitenwinkel $\gamma$ bezeichnet. Weiterhin weist eine Projektion 33 der Werkzeugachse WZA auf die x'y'-Ebene einen Azimuthwinkel (auch bezeichnet als Achskreuzwinkel) $\varphi$ gegenüber der x'-Richtung auf.

Entsprechend ist die Werkzeugachse WZA doppelt gegenüber der Werkzeugachse (die parallel zur x'-Richtung verläuft) verkippt. Dadurch ist ein Wälzschälanfasen am Werkstück unter doppelter Verkippung der Werkzeugachse WZA gegenüber der Werkstückachse möglich, wie in der DE 10 2014 218 082 A1 beschrieben, deren Inhalt durch Bezugnahme in diese Beschreibung aufgenommen wird.

Die **Fig. 5b** zeigt die Orientierung der weiteren Werkzeugachse wWZA der weiteren Werkzeugspindel 30 der oberen Anfasvorrichtung 18. Am weiteren Werkzeug 32 ist ein Hilfskoordinatensystem x"/y"/z" eingezeichnet, das gegenüber dem eigentlichen xyz-Koordinatensystem parallel verschoben ist, um die Winkelverhältnisse besser erkennen zu können.

Die weitere Werkzeugachse wWZA ist um einen weiteren Polarwinkel $\Theta w$ gegenüber der z"-Richtung verschwenkt. Die Differenz des weiteren Polarwinkels $\Theta w$ zu 90° (also der Winkel zwischen der weiteren Werkzeugachse wWZA und der x"y"-Ebene) wird als weiterer Breitenwinkel wy bezeichnet. Weiterhin weist eine Projektion 34 der weiteren Werkzeugachse wWZA auf die x"y"-Ebene einen weiteren Azimuthwinkel $\varphi w$ gegenüber der x"-Richtung auf.

Aufgrund der Drehstellung des Drehhalters 20 (mit den Anfasvorrichtungen 17, 18 in y'-Richtung bzw. y"-Richtung direkt übereinander) und der gegenseitigen festen Verkippung der Werkzeugachse WZA und der weiteren Werkzeugachse wWZA gilt hier

$$\varphi w = - \varphi$$

und

$$\Theta w = \Theta.$$

Mit den beiden Anfasvorrichtungen 17, 18 können linksseitige und rechtsseitige Zahnflanken auf einer Werkstückseite angefast werden. Durch Drehen des Drehhalters 20 um 180° um dessen Drehachse DA können entsprechende Verhältnisse für eine Anfasbearbeitung einer (in x-Richtung) gegenüberliegenden Werkstückseite erreicht werden.

Man beachte, dass ein Werkzeug 31, 32 typischerweise jeweils so an das Werkstück angelegt wird, dass das Lot einer Kontaktzone von Werkzeug 31, 32 und Werkstück auf die Werkstückachse die z-Richtung definiert.

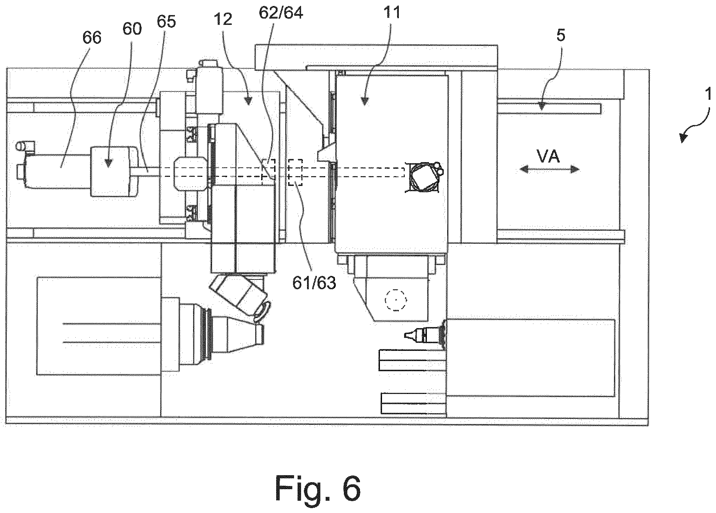

Die **Fig. 6** erläutert eine zweite Ausführungsform einer erfindungsgemäßen Wälzfräsmaschine 1, die weitgehend der Ausführungsform von Fig. 1 und Fig. 2 entspricht, so dass hier nur die wesentlichen Unterschiede erläutert werden.

Bei dieser Ausführungsform ist ein gemeinsamer motorischer Antrieb 60 für den ersten Schlitten 11 und den zweiten Schlitten 12 vorgesehen. Ein Antriebsmotor 66 des gemeinsame motorischen Antriebs 60 treibt eine Antriebsspindel 65 mit Außengewinde, hier einen Kugelgewindetrieb an, die unter dem ersten und zweiten Schlitten 11, 12 verläuft. Auf der Antriebsspindel 65 sitzen ein erstes Kraftübertragungselement 61 mit einem Innengewinde in Gestalt einer Mutter 63 und ein zweites Kraftübertragungselement 62 mit Innengewinde in Gestalt einer Mutter 64 auf. Das erste Kraftübertragungselement 61 ist in nicht näher dargestellter Weise fest am ersten Schlitten 11 befestigt, etwa verschraubt, und das zweite Kraftübertragungselement 62 ist in nicht näher dargestellter Weise fest am zweiten Schlitten 12 befestigt, etwa verschraubt.

Durch Drehen der Antriebsspindel 65 mit dem Antriebsmotor 66 des gemeinsamen motorischen Antriebs 60 werden die an ihrem jeweiligen Schlitten 11, 12 drehfest gehaltenen Muttern 63, 64 entlang der Verfahrachse des gemeinsamen Schienensystems 5 bewegt (geschraubt). Die Muttern 63, 64 nehmen ihre jeweiligen Schlitten 11, 12 dabei mit.

Die beiden Schlitten 11, 12 sind also jeweils separat angetrieben, bewegen sich aber synchron zueinander in festem Abstand (von einem etwaigen Steigungsfehler der Antriebsspindel 65 abgesehen), ohne dass eine mechanische Kopplungsvorrichtung die beiden Schlitten 11, 12 verbindet. Sowohl der erste Schlitten 11 als auch der zweite Schlitten 12 sind hier angetriebene Schlitten.

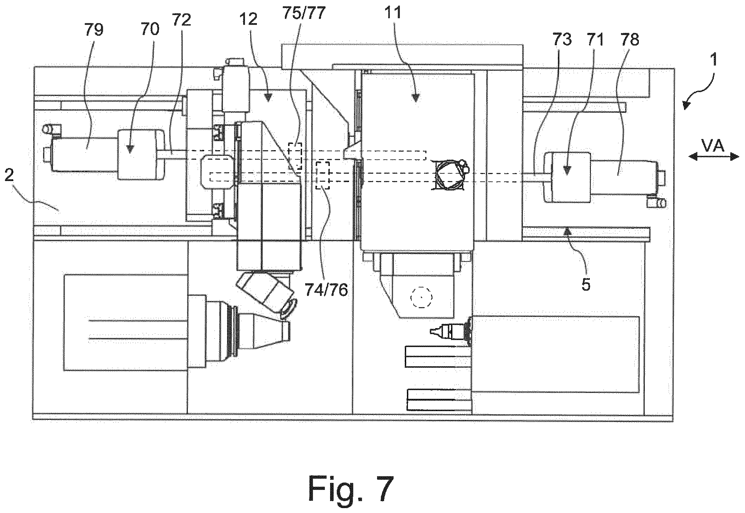

Die **Fig. 7** erläutert eine dritte Ausführungsform einer erfindungsgemäßen Wälzfräsmaschine 1, die weitgehend der Ausführungsform von Fig. 1 und Fig. 2 entspricht, so dass hier nur die wesentlichen Unterschiede erläutert werden.

Bei dieser Ausführungsform verfügt der erste Schlitten 11 über einen eigenen motorischen Antrieb 71, und der zweite Schlitten 12 verfügt über einen eigenen motorischen Antrieb 70.

Ein Antriebsmotor 78 des motorische Antriebs 71 treibt eine Antriebsspindel 73 mit Außengewinde, hier einen Kugelgewindetrieb, an, auf welchem ein Kraftübertragungselement 74 mit Innengewinde, hier eine Mutter 76, aufgesetzt (aufgeschraubt) ist. Die Mutter 76 ist in nicht näher dargestellter Weise am ersten Schlitten 11 befestigt, etwa angeschraubt. Ein Antriebsmotor 79 des motorischen Antriebs 70 treibt eine Antriebsspindel 72 mit Außengewinde, hier einen Kugelgewindetrieb, an, auf welchem ein Kraftübertragungselement 75 mit Innengewinde, hier eine Mutter 77, aufgesetzt (aufgeschraubt) ist. Die Mutter 77 ist in nicht näher dargestellter Weise am zweiten Schlitten 12 befestigt, etwa angeschraubt. Die Antriebsspindeln 72, 73 verlaufen parallel zueinander unterhalb der beiden Schlitten 11, 12.

Durch Drehen der Antriebsspindel 73 mit dem Antriebsmotor 78 des motorischen Antriebs 71 wird die am ersten Schlitten 11 drehfest gehaltene Mutter 76 entlang der Verfahrachse des gemeinsamen Schienensystems 5 bewegt (geschraubt). Durch Drehen der Antriebsspindel 72 mit dem Antriebsmotor 79 des motorischen Antriebs 70 wird die am zweiten Schlitten 12 drehfest gehaltene Mutter 77 entlang der Verfahrachse VA des gemeinsamen Schienensystems 5 bewegt (geschraubt). Die Muttern 76, 77 nehmen ihre jeweiligen Schlitten 11, 12 dabei mit.

Die beiden Schlitten 11, 12 sind hier nicht nur separat, sondern auch unabhängig voneinander angetrieben. Insbesondere kann einer der Schlitten 11, 12 auf der Verfahrachse VA bewegt werden, während der andere Schlitten 11, 12 ruht. Sowohl der erste Schlitten 11 als auch der zweite Schlitten 12 sind hier angetriebene Schlitten.

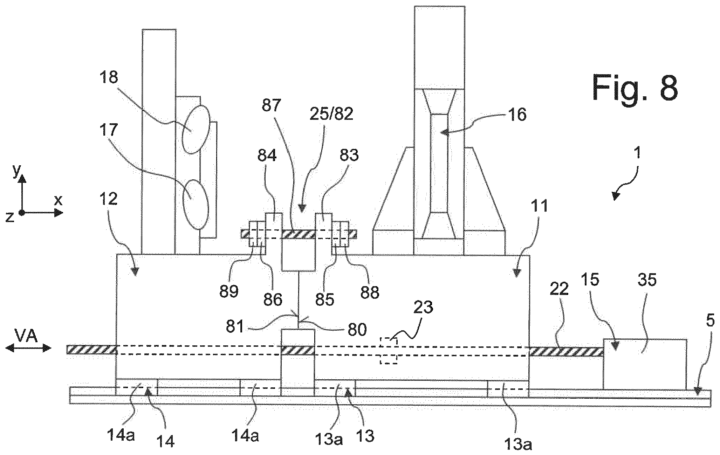

**Fig. 8** illustriert eine Kopplungsvorrichtung, wie sie im Rahmen der Erfindung eingesetzt werden kann, etwa bei einer Wälzfräsmaschine ähnlich wie Fig. 1, 2 und 3 gezeigt. Es werden nur die wesentlichen Unterschiede erläutert. Die Fig. 8 zeigt hierzu eine schematische Seitenansicht der Wälzfräsmaschine 1.

Der erste Schlitten 11 ist ein angetriebener Schlitten, der hier durch den motorischen Antrieb 15 mit einem Antriebsmotor 35 über die Antriebsspindel 22 und das Kraftübertragungselement 23 angetrieben wird. Der zweite Schlitten 12 ist ein nicht-angetriebener Schlitten. Die Schlitten 11, 12 sind mit einer Kopplungsvorrichtung 25 mechanisch aneinander gekoppelt, so dass sie auf dem gemeinsamen Schienensystem 5 mit ihren jeweiligen Schlittenführungssystemen 13, 14 auf Rolllagern 13a, 14a zusammen verfahren können.

Die Schlitten 11, 12 verfügen in der gezeigten Ausführungsform über gegenseitige Anlageflächen 80, 81, mit denen sie (bezüglich der Verfahrachse VA) aneinander gefahren angeordnet sind, also aneinander anliegen. Die gegenseitigen Anlageflächen 80, 81 verlaufen hier senkrecht zur Verfahrachse VA. Die Kopplungsvorrichtung 25 umfasst hier eine Spannvorrichtung 82. Mit einem Gewindebolzen 87, der ein Außengewinde aufweist, werden zwei gelochte Laschen 83, 84 am ersten Schlitten 11 und am zweiten Schlitten 12 durchragt. Außen auf dem Gewindebolzen 87 sind jeweils jenseits der Laschen 83, 84 Spannmuttern 85, 86 mit passendem Innengewinde angebracht, die die Laschen 83, 84 umgreifen und mit denen der Gewindebolzen 87 unter elastische Zugspannung gesetzt wird. Entsprechend zieht der Gewindebolzen 87 die Schlitten 11, 12 aufeinander zu. Die spannende Position der Spannmuttern 85, 86 ist hier mit Kontermuttern 88, 89 gesichert. Die Kopplungsvorrichtung 25 sorgt hierfür eine vollständig starre Kopplung der Schlitten 11, 12, insbesondere in x-Richtung und z-Richtung.

Bezugszeichenliste:

| 1 | Wälzfräsmaschine |
|---|---|
| 2 | Maschinenbett |
| 3 | Werkstückspindel |
| 4 | Gegenlager |
| 5 | (gemeinsames) Schienensystem |
| 5a, 5b | Schienen |
| 11 | erster Schlitten |
| 12 | zweiter Schlitten |
| 13 | erstes Schlittenführungssystem |
| 13a | Rolllager (Rolllagerelement, Rollschuh) am ersten Schlitten |
| 14 | zweites Schlittenführungssystem |
| 14a | Rolllager (Rolllagerelement, Rollschuh) am zweiten Schlitten |
| 15 | motorischer Antrieb (bei einem angetriebenen Schlitten) |
| 16 | Wälzfräskopf |
| 17 | (untere) Anfasvorrichtung |
| 18 | weitere (obere) Anfasvorrichtung |
| 19 | Werkzeughalterung |
| 20 | Drehhalter |
| 21 | Werkstück |
| 22 | Antriebsspindel (bei einem angetriebenen Schlitten) |
| 23 | Kraftübertragungselement |
| 24 | Mutter |
| 25 | Kopplungsvorrichtung |
| 26 | Positionssensor |
| 27a, 27b | Löcher |
| 28 | Zwischenträger |
| 29 | Werkzeugspindel |
| 30 | weitere Werkzeugspindel |
| 31 | verzahntes Werkzeug |
| 32 | weiteres verzahntes Werkzeug |
| 33 | Projektion Werkzeugachse auf x'y'-Ebene |
| 34 | Projektion weitere Werkzeugachse auf x"y"-Ebene |
| 35 | Antriebsmotor |
| 36 | identischer Abschnitt des Schienensystems |
| 60 | gemeinsamer motorischer Antrieb |
| 61 | erstes Kraftübertragungselement |
| 62 | zweites Kraftübertragungselement |
| 63 | Mutter (erster Schlitten) |
| 64 | Mutter (zweiter Schlitten) |
| 65 | Antriebsspindel |
| 66 | Antriebsmotor (gemeinsamer motorischer Anrieb) |
| 70 | motorischer Antrieb (für zweiten Schlitten, bei zwei unabhängig voneinander angetriebenen Schlitten) |
| 71 | motorischer Antrieb (für ersten Schlitten, bei zwei unabhängig voneinander angetriebenen Schlitten) |
| 72 | Antriebswelle |
| 73 | Antriebswelle |
| 74 | Kraftübertragungselement (erster Schlitten) |
| 75 | Kraftübertragungselement (zweiter Schlitten) |
| 76 | Mutter (erster Schlitten) |
| 77 | Mutter (zweiter Schlitten) |
| 78 | Antriebsmotor (erster Schlitten) |
| 79 | Antriebsmotor (zweiter Schlitten) |
| 80 | Anlagefläche (erster Schlitten) |
| 81 | Anlagefläche (zweiter Schlitten) |
| 82 | Spannvorrichtung |
| 83 | gelochte Lasche (erster Schlitten) |
| 84 | gelochte Lasche (zweiter Schlitten) |
| 85 | Spannmutter (erster Schlitten) |
| 86 | Spannmutter (zweiter Schlitten) |
| 87 | Gewindebolzen |
| 88 | Kontermutter (erster Schlitten) |
| 89 | Kontermutter (zweiter Schlitten) |
| DA | Drehachse |
| VA | Verfahrachse |
| WSA | Werkstückachse |
| WZA | Werkzeugachse |
| wWZA | weitere Werkzeugachse |
| $\gamma$ | Breitenwinkel |
| $\gamma w$ | weiterer Breitenwinkel |
| $\varphi$ | Azimuthwinkel |
| $\varphi w$ | weiterer Azimuthwinkel |
| $\Theta$ | Polarwinkel |
| $\Theta w$ | weiterer Polarwinkel |

**Patentansprüche**

1. Wälzfräsmaschine (1), umfassend

 - eine Werkstückspindel (3), mit der ein Werkstück (21) um eine Werkstückachse (WSA) drehbar ist,
 - einen Wälzfräskopf (16),
 - wenigstens eine Anfasvorrichtung (17, 18),
 - einen ersten Schlitten (11) mit einem ersten Schlittenführungssystem (13), wobei auf dem ersten Schlitten (11) der Wälzfräskopf (16) angeordnet ist,
 - ein Schienensystem (5), wobei auf dem Schienensystem (5) der erste Schlitten (11) mit seinem ersten Schlittenführungssystem (13) verfahrbar angeordnet ist,

 **dadurch gekennzeichnet,**

 **dass** die Wälzfräsmaschine (1) weiterhin umfasst

- einen zweiten Schlitten (12) mit einem zweiten Schlittenführungssystem (14), wobei auf dem zweiten Schlitten (12) die wenigstens eine Anfasvorrichtung (17, 18) angeordnet ist,

**dass** auf dem Schienensystem (5) auch der zweite Schlitten (12) mit seinem zweiten Schlittensystem (14) verfahrbar angeordnet ist, so dass der erste Schlitten (11) und der zweite Schlitten (12) auf einem identischen Abschnitt (36) des Schienensystems (5) verfahrbar sind, dass sowohl der erste Schlitten (11) als auch der zweite Schlitten (12) als angetriebene Schlitten ausgebildet sind,
und **dass** ein gemeinsamer motorischer Antrieb (60) für die beiden angetriebenen Schlitten vorhanden ist.

2. Wälzfräsmaschine (1) nach Anspruch 1, **dadurch gekennzeichnet,**

**dass** der gemeinsame motorische Antrieb (60) einen an einem Maschinenbett (2) angeordneten Antriebsmotor (66) umfasst, der eine Antriebsspindel (65) mit einem Außengewinde, insbesondere einen Kugelgewindetrieb, antreibt,
**dass** der erste Schlitten (11) ein erstes Kraftübertragungselement (61) mit einem Innengewinde, insbesondere eine am ersten Schlitten (11) befestigte Mutter (63), aufweist, und der zweite Schlitten (12) ein zweites Kraftübertragungselement (62) mit einem Innengewinde, insbesondere eine am zweiten Schlitten befestigte Mutter (64), aufweist,
und **dass** das erste Kraftübertragungselement (61) und das zweite Kraftübertragungselement (62) beide auf der Antriebsspindel (65) sitzen.

3. Wälzfräsmaschine (1), umfassend

- eine Werkstückspindel (3), mit der ein Werkstück (21) um eine Werkstückachse (WSA) drehbar ist,
- einen Wälzfräskopf (16),
- wenigstens eine Anfasvorrichtung (17, 18),
- einen ersten Schlitten (11) mit einem ersten Schlittenführungssystem (13), wobei auf dem ersten Schlitten (11) der Wälzfräskopf (16) angeordnet ist,
- ein Schienensystem (5), wobei auf dem Schienensystem (5) der erste Schlitten (11) mit seinem ersten Schlittenführungssystem (13) verfahrbar angeordnet ist,

**dadurch gekennzeichnet,**

**dass** die Wälzfräsmaschine (1) weiterhin umfasst

- einen zweiten Schlitten (12) mit einem zweiten Schlittenführungssystem (14), wobei auf dem zweiten Schlitten (12) die wenigstens eine Anfasvorrichtung (17, 18) angeordnet ist,

und **dass** auf dem Schienensystem (5) auch der zweite Schlitten (12) mit seinem zweiten Schlittensystem (14) verfahrbar angeordnet ist, so dass der erste Schlitten (11) und der zweite Schlitten (12) auf einem identischen Abschnitt (36) des Schienensystems (5) verfahrbar sind, dass einer der Schlitten (11, 12) als angetriebener Schlitten ausgebildet ist, wobei für den angetriebenen Schlitten ein motorischer Antrieb (15) vorhanden ist, mit dem der angetriebene Schlitten auf dem Schienensystem (5) verfahrbar ist,
**dass** der andere Schlitten (11, 12) als nicht-angetriebener Schlitten ausgebildet ist,
und **dass** eine Kopplungsvorrichtung (25) vorhanden ist, mit dem der angetriebene Schlitten und der nicht-angetriebene Schlitten mechanisch miteinander koppelbar sind, insbesondere mechanisch miteinander gekoppelt sind.

4. Wälzfräsmaschine (1) nach Anspruch 3, **dadurch gekennzeichnet, dass** für den nicht-angetriebenen Schlitten ein eigener Positionssensor (26) vorhanden ist, mit dem eine Verfahrposition des nicht-angetriebenen Schlittens auf dem Schienensystem (5) bestimmbar ist.

5. Wälzfräsmaschine (1) nach Anspruch 3 oder 4, **dadurch gekennzeichnet, dass** der angetriebene Schlitten der erste Schlitten (11) ist, und der nicht-angetriebene Schlitten der zweite Schlitten (12) ist.

6. Wälzfräsmaschine (1) nach einem der Ansprüche 3 bis 5, **dadurch gekennzeichnet, dass** die Kopplungsvorrichtung (25) dazu ausgebildet ist, die beiden Schlitten (11, 12) entlang einer Verfahrachse (VA) auf dem Schienensystem (5) starr miteinander zu verbinden.

7. Wälzfräsmaschine (1) nach Anspruch 6, **dadurch gekennzeichnet, dass** die Schlitten (11, 12) bezüglich der Verfahrachse (VA) einander zugewandte gegenseitige Anlageflächen (80, 81) ausbilden, und dass die Kopplungsvorrichtung (25) eine Spannvorrichtung (82) umfasst, die zumindest Teile der beiden Schlitten (11, 12) umgreift und die Schlitten (11, 12) mit aneinander anliegenden Anlageflächen (80, 81) aufeinander zu verspannt.

8. Wälzfräsmaschine (1) nach einem der vorhergehenden Ansprüche, **dadurch gekennzeichnet, dass** die Werkstückachse (WSA) der Werkstückspindel (3) und eine Verfahrachse (VA) des Schienensystems (5) parallel zueinander verlaufen, insbesondere wobei die Werkstückachse (WSA) und die Verfahrachse (5) horizontal verlaufen.

9. Wälzfräsmaschine (1) nach einem der vorhergehenden Ansprüche, **dadurch gekennzeichnet, dass** das erste Schlittenführungssystem (13) und das zweite Schlittenführungssystem (14) mit Rolllagern (13a, 14a) ausgebildet sind.

10. Wälzfräsmaschine (1) nach einem der vorhergehenden Ansprüche, **dadurch gekennzeichnet, dass** auf dem zweiten Schlitten (12) zwei Anfasvorrichtungen (17, 18) angeordnet sind.

11. Wälzfräsmaschine (1) nach einem der vorhergehenden Ansprüche, **dadurch gekennzeichnet, dass** die wenigstens eine Anfasvorrichtung (17, 18) für ein Wälzschälanfasen ausgebildet ist.

12. Wälzfräsmaschine (1) nach Anspruch 11, **dadurch gekennzeichnet, dass** die wenigstens eine Anfasvorrichtung (17, 18) für ein Wälzschälanfasen unter einem Azimuthwinkel $\varphi > 0°$ und einem Polarwinkel $\Theta < 90°$ ausgebildet ist.

13. Wälzfräsmaschine (1) nach Anspruch 12, **dadurch gekennzeichnet,**

    **dass** die Werkstückachse (WSA) entlang einer x-Richtung verläuft,
    **dass** eine Werkzeughalterung (19) auf dem zweiten Schlitten (12) jeweils linear in einer y-Richtung und einer z-Richtung verfahrbar ist, wobei die x-, y- und z-Richtung ein rechtwinkliges Koordinatensystem bilden, dass eine Werkzeugspindel (29) für ein verzahntes Werkzeug (31) auf der Werkzeughalterung (19) angeordnet ist,
    und **dass** eine Werkzeugachse (WZA), um die die Werkzeugspindel (29) drehbar ist, um den Azimuthwinkel $\varphi > 0°$ in einer xy-Ebene gegen die x-Richtung verschwenkt ist und um den Polarwinkel $\Theta < 90°$ gegen die z-Richtung verschwenkt ist,
    insbesondere wobei die x-Richtung und die z-Richtung horizontal verlaufen.

14. Wälzfräsmaschine (1) nach Anspruch 13, **dadurch gekennzeichnet, dass** auf der Werkzeughalterung (19) ein Drehhalter (20) angeordnet ist, der um eine Drehachse (DA) drehbar ist, insbesondere motorisch drehbar ist, wobei die Drehachse (DA) parallel zur z-Richtung verläuft, und dass auf dem Drehhalter (20) die Werkzeugspindel (29) angeordnet ist.

15. Wälzfräsmaschine (1) nach Anspruch 14, **dadurch gekennzeichnet,**

    **dass** auf dem zweiten Schlitten (12) zwei Anfasvorrichtungen (17, 18) für ein Wälzschälanfasen angeordnet sind,
    wobei auf dem Drehhalter (20) auch eine weitere Werkzeugspindel (30) für ein weiteres verzahntes Werkzeug (32) angeordnet ist,
    und wobei eine weitere Werkzeugachse (wWZA), um die die weitere Werkzeugspindel (30) drehbar ist, um einen weiteren Azimuthwinkel $\varphi w$ in der xy-Ebene gegen die x-Achse verschwenkt ist und um einen weiteren Polarwinkel $\Theta w$ gegen die z-Achse verschwenkt ist,
    mit $\varphi w = -\varphi$ und $\Theta w = \Theta$.

**Claims**

1. A hobbing machine (1) comprising

   - a workpiece spindle (3), by means of which a workpiece (21) can be rotated about a workpiece axis (WSA),
   - a hobbing head (16),
   - at least one chamfering device (17, 18),
   - a first slide (11) with a first slide guide system (13), wherein the hobbing head (16) is arranged on the first slide (11),
   - a rail system (5), wherein the first slide (11), by means of its first slide guide system (13), is arranged in a displaceable manner on the rail system (5),

   **characterized**

   **in that** the hobbing machine (1) also comprises

     - a second slide (12) with a second slide guide system (14), wherein the at least one chamfering device (17, 18) is arranged on the second slide (12),

     **in that** also the second slide (12), by means of its second slide guide system (14), is arranged in a displaceable manner on the rail system (5), such that the first slide (11) and the second slide (12) can be displaced on an identical portion (36) of the rail system (5),
     **in that** both the first slide (11) and the second slide (12) are designed in the form of driven slides,
     and **in that** a common motor drive (60) is provided for the two driven slides.

**2.** The hobbing machine (1) as claimed in claim 1, **characterized**

in that the common motor drive (60) comprises a drive motor (66), which is arranged on a machine bed (2) and drives an externally threaded drive spindle (65), in particular a ball screw,

in that the first slide (11) has a first internally threaded force-transmission element (61), in particular a nut (63) fastened on the first slide (11), and the second slide (12) has a second internally threaded force-transmission element (62), in particular a nut (64) fastened on the second slide,

and in that the first force-transmission element (61) and the second force-transmission element (62) are both seated on the drive spindle (65).

**3.** A hobbing machine (1) comprising

- a workpiece spindle (3), by means of which a workpiece (21) can be rotated about a workpiece axis (WSA),
- a hobbing head (16),
- at least one chamfering device (17, 18),
- a first slide (11) with a first slide guide system (13), wherein the hobbing head (16) is arranged on the first slide (11),
- a rail system (5), wherein the first slide (11), by means of its first slide guide system (13), is arranged in a displaceable manner on the rail system (5),

**characterized**

in that the hobbing machine (1) also comprises

- a second slide (12) with a second slide guide system (14), wherein the at least one chamfering device (17, 18) is arranged on the second slide (12), and in that also the second slide (12), by means of its second slide guide system (14), is arranged in a displaceable manner on the rail system (5), such that the first slide (11) and the second slide (12) can be displaced on an identical portion (36) of the rail system (5),

in that one of the slides (11, 12) is designed in the form of a driven slide, wherein a motor drive (15) is provided for the driven slide by means of which the driven slide can be displaced on the rail system (5),

in that the other slide (11, 12) is designed in the form of a non-driven slide, and in that a coupling device (25) is provided by means of which the driven slide and the non-driven slide can be coupled to one another mechanically, in particular are coupled to one another mechanically.

**4.** The hobbing machine (1) as claimed in claim 3, **characterized by** the provision, for the non-driven slide, of a dedicated position sensor (26), which can determine a displacement position of the non-driven slide on the rail system (5).

**5.** The hobbing machine (1) as claimed in claim 3 or 4, **characterized in that** the driven slide is the first slide (11) and the non-driven slide is the second slide (12).

**6.** The hobbing machine (1) as claimed in one of claims 3 to 5, **characterized in that** the coupling device (25) is designed to connect the two slides (11, 12) to one another rigidly along a displacement axis (VA) on the rail system (5).

**7.** The hobbing machine (1) as claimed in claim 6, **characterized in that** the slides (11, 12) form mutual abutment surfaces (80, 81) which face one another, as seen in relation to the displacement axis (VA), and **in that** the coupling device (25) comprises a tensioning device (82), which engages around at least parts of the two slides (11, 12) and braces the slides (11, 12), with abutting abutment surfaces (80, 81), against one another.

**8.** The hobbing machine (1) as claimed in one of the preceding claims, **characterized in that** the workpiece axis (WSA) of the workpiece spindle (3) and a displacement axis (VA) of the rail system (5) run parallel to one another, in particular wherein the workpiece axis (WSA) and the displacement axis (VA) run horizontally.

**9.** The hobbing machine (1) as claimed in one of the preceding claims, **characterized in that** the first slide guide system (13) and the second slide guide system (14) are formed with rolling bearings (13a, 14a).

**10.** The hobbing machine (1) as claimed in one of the preceding claims, **characterized in that** two chamfering devices (17, 18) are arranged on the second slide (12).

**11.** The hobbing machine (1) as claimed in one of the preceding claims, **characterized in that** the at least one chamfering device (17, 18) is designed for chamfering by skiving.

**12.** The hobbing machine (1) as claimed in claim 11, **characterized in that** the at least one chamfering device (17, 18) is designed for chamfering by skiving at an azimuthal angle $\varphi > 0°$ and a polar angle $\Theta < 90°$.

**13.** The hobbing machine (1) as claimed in claim 12, **characterized**

in that the workpiece axis (WSA) runs along an x direction,

in that a toolholder (19) can be displaced on the second slide (12) in each case linearly in a y direction and a z direction, wherein the x, y and z directions form a right-angled coordinate system,

in that a tool spindle (29) for a toothed tool (31) is arranged on the toolholder (19),

and in that a tool axis (WZA), about which the tool spindle (29) can be rotated, is pivoted by the azimuthal angle $\varphi > 0°$ in an xy plane in relation to the x direction and by the polar angle $\Theta < 90°$ in relation to the z direction,

in particular wherein the x direction and the z direction run horizontally.

**14.** The hobbing machine (1) as claimed in claim 13, **characterized in that** a rotary mount (20) is arranged on the toolholder (19) and can be rotated, in particular rotated by a motor, about an axis of rotation (DA), wherein the axis of rotation (DA) runs parallel to the z direction, and **in that** the tool spindle (29) is arranged on the rotary mount (20).

**15.** The hobbing machine (1) as claimed in claim 14, **characterized**

in that two chamfering devices (17, 18) for chamfering by skiving are arranged on the second slide (12),

wherein also a further tool spindle (30) for a further toothed tool (32) is arranged on the rotary mount (20),

and wherein a further tool axis (wWZA), about which the further tool spindle (30) can be rotated, is pivoted by a further azimuthal angle $\varphi w$ in the xy plane in relation to the x axis and by a further polar angle $\Theta w$ in relation to the z axis, where $\varphi w = -\varphi$ and $\Theta w = \Theta$.

**Revendications**

**1.** Machine de taillage par fraise-mère (1), comprenant

- une broche de pièce (3) permettant de faire tourner une pièce (21) autour d'un axe de pièce (WSA),
- une tête de fraise-mère (16),
- au moins un dispositif de chanfreinage (17, 18),
- un premier chariot (11) avec un premier système de guidage de chariot (13), la tête de fraise-mère (16) étant agencée sur le premier chariot (11),

- un système de rails (5), le premier chariot (11) muni de son premier système de guidage de chariot (13) étant agencé de manière à pouvoir être déplacé sur le système de rails (5),

**caractérisée en ce que**

la machine de taillage par fraise-mère (1) comprend en outre

- un second chariot (12) muni d'un second système de guidage de chariot (14), le au moins un dispositif de chanfreinage (17, 18) étant agencé sur le second chariot (12), **en ce que** le second chariot (12) muni de son second système de guidage de chariot (14) est également agencé de manière à pouvoir être déplacé sur le système de rails (5), de sorte que le premier chariot (11) et le second chariot (12) peuvent être déplacés sur la même section (36) du système de rails (5),

**en ce que** le premier chariot (11) et le second chariot (12) sont tous deux conçus comme des chariots entraînés,

et **en ce qu'**un entraînement motorisé commun (60) est fourni pour les deux chariots entraînés.

**2.** Machine de taillage par fraise-mère (1) selon la revendication 1, **caractérisée en ce que** l'entraînement motorisé commun (60) comprend un moteur d'entraînement (66) agencé sur un banc de machine (2) et entraînant une broche d'entraînement (65), en particulier une vis à billes, munie d'un filetage extérieur,

**en ce que** le premier chariot (11) présente un premier élément de transmission de force (61) muni d'un filetage intérieur, en particulier un écrou (63) fixé au premier chariot (11), et le second chariot (12) présente un second élément de transmission de force (62) muni d'un filetage intérieur, en particulier un écrou (64) fixé au second chariot,

et **en ce que** le premier élément de transmission de force (61) et le second élément de transmission de force (62) reposent tous deux sur la broche d'entraînement (65).

**3.** Machine de taillage par fraise-mère (1), comprenant

- une broche de pièce (3) permettant de faire tourner une pièce (21) autour d'un axe de pièce (WSA),
- une tête de fraise-mère (16),
- au moins un dispositif de chanfreinage (17, 18),
- un premier chariot (11) muni d'un premier système de guidage de chariot (13), la tête de fraise-mère (16) étant agencée sur le premier chariot (11),

- un système de rails (5), le premier chariot (11) muni de son premier système de guidage de chariot (13) étant agencé de manière à pouvoir être déplacé sur le système de rails (5),

**caractérisée en ce que**

la machine de taillage par fraise-mère (1) comprend en outre

- un second chariot (12) muni d'un second système de guidage de chariot (14), le au moins un dispositif de chanfreinage (17, 18) étant agencé sur le second chariot (12), et **en ce que** le second chariot (12) muni de son second système de chariot (14) est également agencé de manière à pouvoir être déplacé sur le système de rails (5), de sorte que le premier chariot (11) et le second chariot (12) peuvent être déplacés sur la même section (36) du système de rails (5),

**en ce qu'**un des chariots (11, 12) est conçu comme un chariot entraîné, un entraînement motorisé (15) grâce auquel le chariot entraîné peut être déplacé sur le système de rails (5) étant fourni pour le chariot entraîné, **en ce que** l'autre chariot (11, 12) est conçu comme un chariot non entraîné, et **en ce qu'**un dispositif de couplage (25) est fourni, grâce auquel le chariot entraîné et le chariot non entraîné peuvent être couplés mécaniquement l'un à l'autre, en particulier sont couplés mécaniquement l'un à l'autre.

4. Machine de taillage par fraise-mère (1) selon la revendication 3, **caractérisée en ce qu'**un capteur de position (26) dédié, grâce auquel une position de déplacement du chariot non entraîné sur le système de rails (5) peut être déterminée, est fourni pour le chariot non entraîné.

5. Machine de taillage par fraise-mère (1) selon la revendication 3 ou 4, **caractérisée en ce que** le chariot entraîné est le premier chariot (11) et le chariot non entraîné est le second chariot (12).

6. Machine de taillage par fraise-mère (1) selon l'une quelconque des revendications 3 à 5, **caractérisée en ce que** le dispositif de couplage (25) est conçu pour relier de manière rigide les deux chariots (11, 12) l'un à l'autre le long d'un axe de déplacement (VA) sur le système de rails (5).

7. Machine de taillage par fraise-mère (1) selon la revendication 6, **caractérisée en ce que** les chariots (11, 12) forment des surfaces d'appui (80, 81) mutuelles tournées l'une vers l'autre par rapport à l'axe de déplacement (VA), et **en ce que** le dispositif de couplage (25) comprend un dispositif de serrage (82) qui entoure au moins des parties des deux chariots (11, 12) et serre l'un contre l'autre les chariots (11, 12) au niveau de leurs surfaces d'appui (80, 81) adjacente l'une à l'autre.

8. Machine de taillage par fraise-mère (1) selon l'une quelconque des revendications précédentes, **caractérisée en ce que** l'axe de pièce (WSA) de la broche de pièce (3) et un axe de déplacement (VA) du système de rails (5) s'étendent parallèlement l'un à l'autre, l'axe de pièce (WSA) et l'axe de déplacement (5) s'étendant en particulier de manière horizontale.

9. Machine de taillage par fraise-mère (1) selon l'une quelconque des revendications précédentes, **caractérisée en ce que** le premier système de guidage de chariot (13) et le second système de guidage de chariot (14) sont réalisés avec des paliers à rouleaux (13a, 14a).

10. Machine de taillage par fraise-mère (1) selon l'une quelconque des revendications précédentes, **caractérisée en ce que** deux dispositifs de chanfreinage (17, 18) sont agencés sur le second chariot (12).

11. Machine de taillage par fraise-mère (1) selon l'une quelconque des revendications précédentes, **caractérisée en ce que** le au moins un dispositif de chanfreinage (17, 18) est conçu pour un chanfreinage à biseauter.

12. Machine de taillage par fraise-mère (1) selon la revendication 11, **caractérisée en ce que** le au moins un dispositif de chanfreinage (17, 18) est conçu pour un chanfreinage à biseauter avec un angle d'azimut $\varphi > 0°$ et un angle polaire $O < 90°$.

13. Machine de taillage par fraise-mère (1) selon la revendication 12, **caractérisée en ce que** l'axe de pièce à usiner (WSA) s'étend le long d'une direction x,

**en ce qu'**un porte-outil (19) peut être déplacé sur le second chariot (12) respectivement de manière linéaire dans une direction y et dans une direction z, les directions x, y et z formant un système de coordonnées orthonormé, **en ce qu'**une broche d'outil (29) destinée à un outil denté (31) est agencée sur le porte-outil (19), et **en ce qu'**un axe d'outil (WZA) autour duquel il est possible de faire tourner la broche d'outil (29) est pivoté par rapport à la direction x selon l'angle d'azimut $\varphi > 0°$ dans un plan xy et est pivoté par rapport à la direction z selon l'angle polaire O < 90°,

la direction x et la direction z s'étendant en particulier de manière horizontale.

14. Machine de taillage par fraise-mère (1) selon la revendication 13, **caractérisée en ce qu'**un support rotatif (20) qu'il est possible de faire tourner, en particulier de manière motorisée, autour d'un axe de rotation (DA) est agencé sur le porte-outil (19), l'axe de rotation (DA) s'étendant de manière parallèle à la direction z, et **en ce que** la broche d'outil (29) est agencée sur le support rotatif (20).

15. Machine de taillage par fraise-mère (1) selon la revendication 14, **caractérisée en ce que** deux dispositifs de chanfreinage (17, 18) destinés à un chanfreinage à biseauter sont agencés sur le second chariot (12),

une broche d'outil (30) supplémentaire destinée à un outil denté (32) supplémentaire étant également agencée sur le support rotatif (20),
et un axe d'outil (wWZA) supplémentaire autour duquel il est possible de faire tourner la broche d'outil (30) supplémentaire étant pivoté par rapport à l'axe x selon un angle d'azimut $\varphi$w supplémentaire dans le plan xy et étant pivoté par rapport à l'axe z selon un angle polaire Ow supplémentaire, avec $\varphi$w = -$\varphi$ et $\Theta$w = $\Theta$.

Fig. 1

Fig. 2

Fig. 3

Fig. 4

EP 3 661 684 B1

Fig. 5a

Fig. 5b

Fig. 6

EP 3 661 684 B1

Fig. 7

EP 3 661 684 B1

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013212430 A1
- DE 202013012505 U1
- DE 102014218082 A1